# EUROPÄISCHE PATENTANMELDUNG

(11) **EP 2 159 891 A2**
(43) Veröffentlichungstag der Anmeldung: **03.03.2010**
(21) Anmeldenummer: 09168855.6
(22) Anmeldetag: 27.08.2009
(51) Int. Cl.: H02G 3/08, H02G 3/14

(54) **Elektroinstallationsdose**

(30) Priorität: 29.08.2008 DE 102008044943
(71) Anmelder: Günther Spelsberg GmbH & Co. KG, 58579 Schalksmühle (DE)
(72) Erfinder: Gerull, Walter, 58579, Schalksmühle (DE); Herbote, Elke, 45549, Sprockhövel (DE)
(74) Vertreter: Michalski Hüttermann & Partner Patentanwälte

(57) **Zusammenfassung**

Die Erfindung betrifft eine Elektroinstallationsdose, mit einem Gehäuse 1 und einem Deckel 2 zum Verschließen des Gehäuses 1, wobei der Deckel 2 mittels einer Scharniereinrichtung 8 am Gehäuse 1 verschwenkbar befestigt ist. Erfindungsgemäß ist die Scharniereinrichtung 8 bei geschlossenem Deckel 2 vollständig innerhalb des Innenraums der Elektroinstallationsdose vorgesehen. Damit wird eine derartige Elektroinstallationsdose angegeben, die eine einfache und verlässliche Möglichkeit des Vorsehens eines Scharniers zwischen Gehäuse und Deckel bereitstellt, ohne den Schutzgrad der Dose zu beeinträchtigen.

## Beschreibung

Die Erfindung betrifft eine Elektroinstallationsdose, mit einem Gehäuse und einem Deckel zum Verschließen des Gehäuses, wobei der Deckel mittels einer Scharniereinrichtung am Gehäuse verschwenkbar befestigt ist.

Elektrische Installationsdosen der eingangs genannten Art werden in unterschiedlichen Anwendungsbereichen eingesetzt und dabei z. B. zur Installation von elektrischen und/oder elektronischen Komponenten, zum Verbinden von Kabeln und/oder zum Abzweigen und Weiterführen von Kabeln verwendet. Die Befestigung des Deckels am Gehäuse mittels eines Scharniers, das ein Verschwenken des Deckels relativ zum Gehäuse und damit ein Öffnen des Gehäuses erlaubt, ist insofern vorteilhaft, als dass der Deckel damit auf unverlierbare Weise am Gehäuse befestigt ist ohne dass er dabei bei Arbeiten im Innenraum des Gehäuses, z. B. zur Installation von elektrischen und/oder elektronischen Einrichtungen, stört.

Im Übrigen ist es in bestimmten Anwendungsbereichen gewünscht bzw. erforderlich, dass die Elektroinstallationsdose einem bestimmten Schutzgrad bzw. einer bestimmten Schutzklasse hinsichtlich des Eindringens von Staub und/oder Wasser genügt. Insofern wird häufig z. B. ein Schutzgrad von "IP 54" nach EN 60529 gefordert, der angibt, dass die Dose neben einem bestimmten Staubschutz auch gegen Strahlwasser geschützt ist. Dazu ist es erforderlich, den Übergang von Gehäuse zu Deckel mittels einer die Dose im geschlossenen Zustand abdichtenden Dichtung zu versehen. In Verbindung mit dem Vorsehen eines Scharniers ist dies jedoch häufig problematisch. Im Übrigen ist keine praktikable Lösung bekannt, die bei einer Dose mit einem Gehäuse und einem Deckel die nachträgliche Anbringbarkeit eines Scharniers ermöglicht, ohne den Schutzgrad der Dose zu verändern.

Ausgehend von dieser Situation ist es die Aufgabe der Erfindung, eine derartige Elektroinstallationsdose anzugeben, die eine einfache und verlässliche Möglichkeit des Vorsehens eines Scharniers zwischen Gehäuse und Deckel bereitstellt, ohne den Schutzgrad der Dose zu beeinträchtigen.

Diese Aufgabe ist gelöst durch eine Elektroinstallationsdose, mit einem Gehäuse und einem Deckel zum Verschließen des Gehäuses, wobei der Deckel mittels einer Scharniereinrichtung am Gehäuse verschwenkbar befestigt ist, **dadurch gekennzeichnet, dass** die Scharniereinrichtung bei geschlossenem Deckel vollständig innerhalb des Innenraums der Elektroinstallationsdose vorgesehen ist.

Erfindungswesentlich ist damit, dass ein innenliegendes Scharnier bereitgestellt wird, das - zumindest bei geschlossenem Deckel - nach außen hin überhaupt nicht in Erscheinung tritt. Damit werden nicht nur störende Einflüsse der Scharniereinrichtung im Außenbereich der Dose vermieden, sondern es kommt auch zu einem Schutz der Scharniereinrichtung, die im üblichen Betriebszustand der Dose, nämlich wenn der Deckel auf dem Gehäuse aufgesetzt ist, überhaupt nicht zugänglich ist.

Grundsätzlich kann die innenliegende Scharniereinrichtung unterschiedlich ausgestaltet sein. Gemäß einer bevorzugten Weiterbildung der Erfindung ist jedoch vorgesehen, dass die Scharniereinrichtung zwei Schwenkachsen aufweist. In diesem Zusammenhang ist es insbesondere bevorzugt, dass die Scharniereinrichtung eine Schwenkachse aufweist, die senkrecht zu ihrer Achse verschiebbar ist. Eine entsprechende Verschiebbarkeit senkrecht zu ihrer Achse kann in unterschiedliche Richtungen vorgesehen sein. Gemäß einer bevorzugten Weiterbildung der Erfindung ist jedoch vorgesehen, dass die Schwenkachse parallel zu einer Gehäusewand verschiebbar ist. Auf diese Weise kann z. B. erreicht werden, dass der Deckel beim Öffnen der Dose vorerst nach oben hin vom Gehäuse abgehoben wird, bevor es zu einer Schwenkbewegung und damit zu einem Öffnen der Dose kommt.

Konkret kann die Scharniereinrichtung unterschiedlich ausgestaltet sein. Gemäß einer bevorzugten Weiterbildung der Erfindung ist in diesem Zusammenhang vorgesehen, dass die Scharniereinrichtung ein am Deckel befestigtes Deckelteil, ein am Gehäuse befestigtes Gehäuseteil und ein das Deckelteil mit dem Gehäuseteil verbindendes Verbindungsteil aufweist, wobei das Verbindungsteil im Deckelteil und im Gehäuseteil jeweils schwenkbar gelagert ist. Gemäß dieser bevorzugten Weiterbildung der Erfindung ist die Scharniereinrichtung also wenigstens dreiteilig, weist nämlich ein Deckelteil, ein Gehäuseteil und ein das Deckelteil mit dem Gehäuseteil verbindendes Verbindungsteil auf, wobei eine Schwenkachse im Deckelteil und eine Schwenkachse im Gehäuseteil vorgesehen ist.

In diesem Zusammenhang ist gemäß einer bevorzugten Weiterbildung der Erfindung ferner vorgesehen, dass das Gehäuseteil eine Führung aufweist, in der das Verbindungsteil verschwenkbar und längsverschieblich bewegbar gelagert ist. Auf diese Weise wird in konkreter Form die oben schon angesprochene Längsverschiebbarkeit wenigstens einer Schwenkachse der Scharniereinrichtung erzielt. Im Übrigen kann das Verbindungsteil unterschiedlichen Formen folgen. Gemäß einer bevorzugten Weiterbildung der Erfindung ist jedoch vorgesehen, dass das Verbindungsteil V-förmig, U-förmig oder halbkreisförmig ausgestaltet ist.

Grundsätzlich können das Deckelteil und das Gehäuseteil auf unterschiedliche Weise am Deckel bzw. am Gehäuse befestigt sein. Gemäß einer bevorzugten Weiterbildung der Erfindung ist jedoch vorgesehen, dass das Deckelteil und/oder das Gehäuseteil jeweils mittels wenigstens einer von außerhalb des Deckels bzw. des Gehäuses angebrachten Schraube befestigt sind. Mit anderen Worten bedeutet dies, dass von außerhalb des Deckels bzw. des Gehäuses her eine Schraube durch die Wandung des Deckels bzw. des Gehäuses hindurchgeführt ist, um im Innenbereich das Deckelteil bzw. das Gehäuseteil zu halten.

In diesem Zusammenhang kann grundsätzlich vorgesehen sein, dass die Schraube gegenüber dem Deckel bzw. dem Gehäuse selbst abdichtend ist. Gemäß einer bevorzugten Weiterbildung der Erfindung ist jedoch vorgesehen, dass zwischen der jeweiligen Schraube und dem Deckel bzw. dem Gehäuse jeweils eine Dichtung vorgesehen ist. Auf diese Weise wird eine nachträgliche Anbringung der Scharniereinrichtung an eine Elektroinstallationsdose mit einem Deckel und einem Gehäuse ermöglicht, ohne den Schutzgrad der Dose zu verändern. In diesem Zusammenhang kann es im Übrigen auch bevorzugt sein, eine Dichtung am Deckelteil bzw. am Gehäuseteil der Scharniereinrichtung vorzusehen, um dann eine in einer Wandung des Deckels bzw. des Gehäuses vorgesehene Bohrung gegenüber dem Innenraum der Dose abzudichten.

Grundsätzlich kann die Scharniereinrichtung mit dem Gehäuse bzw. dem Deckel fest verbunden sein. Gemäß einer bevorzugten Weiterbildung der Erfindung ist jedoch vorgesehen, dass die Scharniereinrichtung am Gehäuse und/oder am Deckel lösbar befestigt ist. In diesem Zusammenhang ist es insbesondere bevorzugt, dass an einer Innenwand des Gehäuses und/oder an einer Innenwand des Deckels jeweils ein Befestigungsteil angebracht ist, an dem die Scharniereinrichtung lösbar befestigt ist. Vorzugsweise gilt dabei, dass das jeweilige Befestigungsteil an der Innenwand des Gehäuses bzw. des Deckels mittels einer Ultraschallverschweißung oder/und mittels einer Verklebung befestigt ist. Schließlich gilt ferner, dass die Scharniereinrichtung vorzugsweise an wenigstens einem Befestigungsteilt mittels einer Klippverbindung befestigt ist. Mit diesem Lösungsansatz wird eine einfache Möglichkeit bereitgestellt, unterschiedliche Dosen-Serien mit einem nachrüstbaren Innenscharnier zu versehen.

Nachfolgend wird die Erfindung anhand eines bevorzugten Ausführungsbeispiels unter Bezugnahme auf die Zeichnung weiter im Detail erläutert.

In der Zeichnung zeigen:
- Fig. 1: eine schematische Teilansicht einer Elektroinstallationsdose gemäß einem bevorzugten Ausführungsbeispiel der Erfindung in geschlossenem Zustand,
- Fig. 2: eine schematische Teilansicht der Elektroinstallationsdose gemäß dem bevorzugten Ausführungsbeispiel der Erfindung mit angehobenem Deckel,
- Fig. 3: eine schematische Teilansicht der Elektroinstallationsdose gemäß dem bevorzugten Ausführungsbeispiel der Erfindung mit aufgeschwenktem Deckel, und
- Fig. 4: die Scharniereinrichtung der Elektroinstallationsdose gemäß dem bevorzugten Ausführungsbeispiel der Erfindung in einer perspektivischen Ansicht.

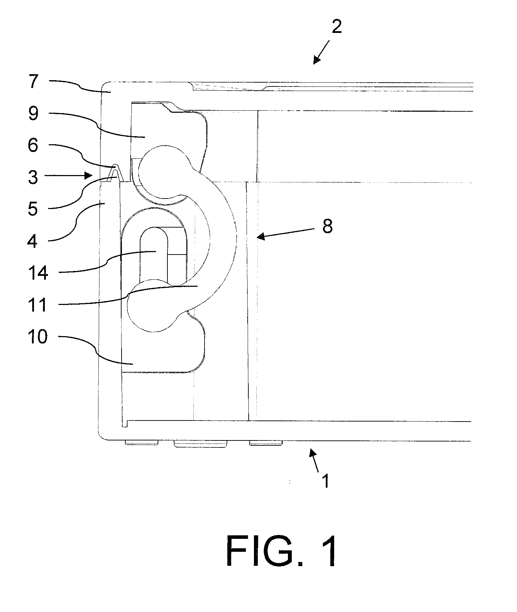

In Fig. 1 ist eine Elektroinstallationsdose gemäß einem bevorzugten Ausführungsbeispiel der Erfindung in einer schematischen Schnittdarstellung gezeigt. Die Elektroinstallationsdose weist ein Gehäuse 1 und einen Deckel 2 auf, der zum Verschließen des Gehäuses 1 dient. Vorliegend ist die Elektroinstallationsdose im geschlossenen Zustand, also mit auf dem Gehäuse 1 aufgesetzten Deckel 2 gezeigt. In geschlossenem Zustand entspricht die Elektroinstallationsdose gemäß dem bevorzugten Ausführungsbeispiel dem Schutzgrad IP 54, was unter anderem durch eine Dichtung 3 gewährleistet wird, die von einem auf dem oberen Rand der Gehäusewand 4 gebildeten Wulst 5 gebildet wird, die in eine entsprechende Nut 6 in der Wand 7 des Deckels 2 eingreift.

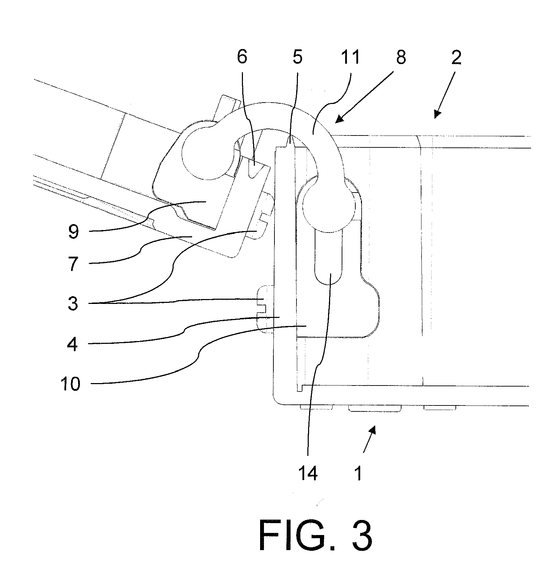

Damit der Deckel 2 von dem Gehäuse 1 abgenommen werden kann, nämlich gegenüber diesem verschwenkt werden kann, ist eine Scharniereinrichtung 8 vorgesehen. Die Scharniereinrichtung 8 weist ein am Deckel 2 befestigtes Deckelteil 9, ein am Gehäuse 1 befestigtes Gehäuseteil 10 und ein das Deckelteil 9 mit dem Gehäuseteil 10 verbindendes Verbindungsteil 11 auf. Das Deckelteil 9 und das Gehäuseteil 10 sind, wie insbesondere Fig. 3 entnehmbar, die die Elektroinstallationsdose gemäß dem bevorzugten Ausführungsbeispiel der Erfindung in geöffnetem Zustand zeigt, jeweils mittels einer Schraube 12 am Gehäuse 1 bzw. am Deckel 2 befestigt. Diese Schrauben 12 sind von außerhalb des Gehäuses 1 bzw. des Deckels 2 durch entsprechende Bohrungen in das Innere der Elektroinstallationsdose geführt, wo sie in das Deckelteil 9 bzw. das Gehäuseteil 10 eingeschraubt sind. Auf diese Weise werden das Deckelteil 9 und das Gehäuseteil 10 an der jeweiligen Innenwand des Gehäuses 1 bzw. des Deckels 2 befestigt.

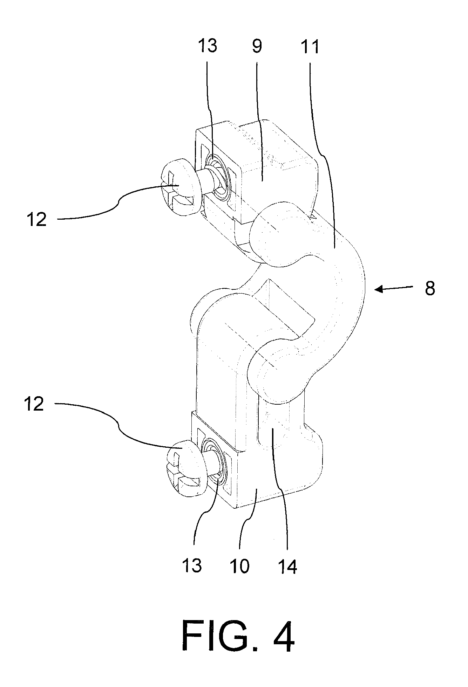

Um dabei eine Abdichtung gegenüber von außen eintretendem Wasser zu erzielen, weisen das Deckelteil 9 sowie das Gehäuseteil 10, wie insbesondere Fig. 4 entnehmbar, jeweils einen Dichtring 13 auf. Diese Dichtringe 13 sind derart am Deckelteil 9 bzw. am Gehäuseteil 10 angeordnet, dass sie die jeweilige Schraube 12 umschließen und eine Abdichtung des Innenraums der Elektroinstallationsdose gemäß dem bevorzugten Ausführungsbeispiel der Erfindung gegenüber der Bohrung und damit gegenüber von außen eindringendem Wasser bilden. Diese Konstruktion ermöglicht es, Elektroinstallationsdosen auch nachträglich mit einer Scharniereinrichtung 8 zu versehen, ohne damit deren Schutzgrad zu gefährden.

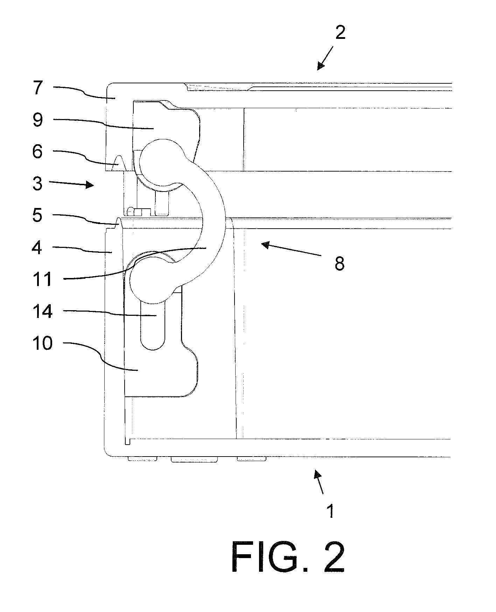

Wie insbesondere den Darstellungen in den Fig. 1, 2 und 3 entnehmbar, weist die Scharniereinrichtung 8 zwei Schwenkachsen auf, nämlich eine Schwenkachse im Deckelteil 9 und eine Schwenkachse im Gehäuseteil 10. Während die Schwenkachse im Deckelteil 9 fix ist, ist die Schwenkachse im Gehäuseteil 10 verschiebbar, und zwar parallel zur Gehäusewand 4. Dies wird dadurch erzielt, dass im Gehäuseteil 10 eine parallel zur Gehäusewand 4 verlaufende Längsführung für das in dem Gehäuseteil 10 befestigte Ende des Verbindungsteils 11 vorgesehen ist. Diese Führung 14 ermöglicht folgende Vorgehensweise beim Öffnen der Elektroinstallationsdose:
Im geschlossenen Zustand, der aus Fig. 1 ersichtlich ist, befindet sich das untere Ende des Verbindungsteils 11 am unteren Ende der Führung 14. In dieser Situation liegt der Deckel 2 vollständig auf dem Gehäuse 1 auf, und es wird die Schutzart IP 54 realisiert. Soll die Elektroinstallationsdose nun geöffnet werden, d.h. der Deckel 2 vom Gehäuse 1 abgehoben werden, so wird der Deckel 2, wie aus Fig. 2 ersichtlich, in einem ersten Schritt vom Gehäuse 1 nach oben abgehoben, ohne es dass es zu einem Verschwenken des Deckels 2 relativ zum Gehäuse 1 kommt. Dabei wird das untere Ende des Verbindungsteils 1 innerhalb der Führung 14 in dem Gehäuseteil nach oben bewegt, bis es dort anschlägt. Bis dahin erfolgt im Allgemeinen kein Verschwenken des Deckels 2 relativ zum Gehäuse. Erst in dieser zuletzt erreichten Stellung wird nun der Deckel 2 "aufgeklappt", d.h. relativ zum Gehäuse 1 verschwenkt, und zwar derart, dass es wohl zu einem Verschwenken um die fixe Achse im Deckelteil 9 als auch zu einem Verschwenken um die verschiebbare Achse im Gehäuseteil 10 kommt. Der vollständig geöffnete Zustand der Elektroinstallationsdose gemäß dem bevorzugten Ausführungsbeispiel der Erfindung ist aus Fig. 3 ersichtlich.

Aus Fig. 4 ist die Scharniereinrichtung 8 mit dem Deckelteil 9, dem Gehäuseteil 10 und dem Verbindungsteil 11 nochmals im Detail ersichtlich, wobei dort auch die Schrauben 12 dargestellt sind, die zur Befestigung der Scharniereinrichtung 8 in der Elektroinstallationsdose dienen. Wie zuvor schon angesprochen, sind zur Abdichtung des Innenraums der Elektroinstallationsdose gegenüber den Bohrungen, durch die die Schrauben 12 hindurchgeführt sind, Dichtringe 13 vorgesehen. Alternativ kann auch zwischen der Außenwand des Gehäuses 1 bzw. des Deckels 2 und der jeweiligen Schraube 12 eine Dichtung vorgesehen sein.

Im Ergebnis wird damit eine derartige Elektroinstallationsdose bereitgestellt, die eine einfache und verlässliche Möglichkeit des Vorsehens eines Scharniers zwischen Gehäuse und Deckel bietet, ohne den Schutzgrad der Dose zu beeinträchtigen.

## Patentansprüche

1. Elektroinstallationsdose, mit einem Gehäuse (1) und einem Deckel (2) zum Verschließen des Gehäuses (1), wobei der Deckel (2) mittels einer Scharniereinrichtung (8) am Gehäuse (1) verschwenkbar befestigt ist, **dadurch gekennzeichnet, dass** die Scharniereinrichtung (8) bei geschlossenem Deckel (2) vollständig innerhalb des Innenraums der Elektroinstallationsdose vorgesehen ist.

2. Elektroinstallationsdose nach Anspruch 1, **dadurch gekennzeichnet, dass** die Scharniereinrichtung (8) zwei Schwenkachsen aufweist.

3. Elektroinstallationsdose nach Anspruch 1 oder 2, **dadurch gekennzeichnet, dass** die Scharniereinrichtung (8) eine Schwenkachse aufweist, die senkrecht zu ihrer Achse verschiebbar ist.

4. Elektroinstallationsdose nach Anspruch 3, **dadurch gekennzeichnet, dass** die Schwenkachse parallel zu einer Gehäusewand (4) verschiebbar ist.

5. Elektroinstallationsdose nach einem der Ansprüche 1 bis 4, **dadurch gekennzeichnet, dass** die Scharniereinrichtung (8) ein am Deckel (2) befestigtes Deckelteil (9), ein am Gehäuse (1) befestigtes Gehäuseteil (10) und ein das Deckelteil (9) mit dem Gehäuseteil (10) verbindendes Verbindungsteil (11) aufweist, wobei das Verbindungsteil (11) im Deckelteil (9) und im Gehäuseteil (10) jeweils schwenkbar gelagert ist.

6. Elektroinstallationsdose nach Anspruch 5, **dadurch gekennzeichnet, dass** das Verbindungsteil (11) V-förmig, U-förmig oder halbkreisförmig ausgestaltet ist.

7. Elektroinstallationsdose nach Anspruch 5 oder 6, **dadurch gekennzeichnet, dass** das Gehäuseteil (10) eine Führung (14) aufweist, in der das Verbindungsteil (11) verschwenkbar und längsverschieblich bewegbar gelagert ist.

8. Elektroinstallationsdose nach einem der Ansprüche 5 bis 7, **dadurch gekennzeichnet, dass** das Deckelteil (9) und/oder das Gehäuseteil (10) jeweils mittels wenigstens einer von außerhalb des Deckels (2) bzw. des Gehäuses (1) angebrachten Schraube (12) befestigt sind.

9. Elektroinstallationsdose nach Anspruch 8, **dadurch gekennzeichnet, dass** zwischen der jeweiligen Schraube (12) und dem Deckel (2) bzw. dem Gehäuse (1) eine Dichtung (13) vorgesehen ist.

10. Elektroinstallationsdose nach einem der Ansprüche 1 bis 7, **dadurch gekennzeichnet, dass** die Scharniereinrichtung am Gehäuse und/oder am Deckel lösbar befestigt ist.

11. Elektroinstallationsdose nach Anspruch 10, **dadurch gekennzeichnet, dass** an einer Innenwand des Gehäuses und/oder an einer Innenwand des Deckels jeweils ein Befestigungsteil angebracht ist, an dem die Scharniereinrichtung lösbar befestigt ist.

12. Elektroinstallationsdose nach Anspruch 11, **dadurch gekennzeichnet, dass** das jeweilige Befestigungsteil an der Innenwand des Gehäuses bzw. des Deckels mittels einer Ultraschallverschweißung oder/und mittels einer Verklebung befestigt ist.

13. Elektroinstallationsdose nach Anspruch 11 oder 12, **dadurch gekennzeichnet, dass** die Scharniereinrichtung an wenigstens einem Befestigungsteilt mittels einer Klippverbindung befestigt ist.

14. Elektroinstallationsdose nach einem der Ansprüche 1 bis 13, **dadurch gekennzeichnet, dass** zwischen dem Gehäuse (1) und dem Deckel (2) eine Dichtung (3) vorgesehen ist.
